(19) Europäisches Patentamt

European Patent Office

Office européen des brevets

(11) **EP 1 683 647 A1**

(12) **EUROPEAN PATENT APPLICATION**
published in accordance with Art. 158(3) EPC

(43) Date of publication:
**26.07.2006 Bulletin 2006/30**

(51) Int Cl.:
*B41M 5/26* (2006.01)   *G11B 7/24* (2006.01)
*G11B 7/0045* (2006.01)

(21) Application number: **04793240.5**

(22) Date of filing: **29.10.2004**

(86) International application number:
**PCT/JP2004/016139**

(87) International publication number:
**WO 2005/044575 (19.05.2005 Gazette 2005/20)**

(84) Designated Contracting States:
**DE ES FR GB IT NL**

(30) Priority: **05.11.2003 JP 2003376003**
**24.05.2004 JP 2004153506**

(71) Applicant: **Ricoh Company, Ltd.**
**Tokyo 143-8555 (JP)**

(72) Inventors:
• **IWASA, Hiroyuki;**
**Ohta-ku, Tokyo;1438555 (JP)**
• **SHINOTSUKA, Michiaki;**
**Ohta-ku, Tokyo;1438555 (JP)**
• **SHINKAI, Masaru;**
**Ohta-ku, Tokyo;1438555 (JP)**

(74) Representative: **Barz, Peter**
**Patentanwalt**
**Kaiserplatz 2**
**80803 München (DE)**

(54) **TWO-LAYER PHASE CHANGE INFORMATION RECORDING MEDIUM AND RECORDING METHOD**

(57) The present invention provides a dual-layer phase-change information recording medium in which the erase ratio in each layer is superior, the dynamic range is improved, and a multi-level recording is possible. For the dual-layer phase-change information recording medium, the compositions of the first recording layer material and the second recording layer material are expressed as $Sb_{\alpha 1}Te_{\beta 1}Ge_{\gamma 1}M1_{\delta 1}$ and $Sb_{\alpha 2}Te_{\beta 2}Ge_{\gamma 2}M2_{\delta 2}$, respectively, where M1 and M2 are any one element selected from Ag, In, Se, Sn, Al, Ti, V, Mn, Fe, Co, Ni, Cu, Zn, Ga, Bi, Si, Dy, Pd, Pt, Au, S, B, C and P; $\alpha_1$, $\beta_1$, $\gamma_1$, $\delta_1$, $\alpha_2$, $\beta_2$, $\gamma_2$ and $\delta_2$ denote percentages by atom and satisfy the following relations: $\alpha_1+\beta_1+\gamma_1+\delta_1=\alpha_2+\beta_2+\gamma_2+\delta_2=100$; $50\leq\alpha_1\leq75$; $25\leq\beta_1\leq40$; $0<\gamma_1\leq10$; $0<\delta_1\leq10$; $60\leq\alpha_2\leq85$; $15\leq\beta_2\leq30$; $0<\gamma_2\leq10$; $0\leq\delta_2\leq10$; and $\beta_2+\gamma_2<\beta_1+\gamma_1<\beta_2+\gamma_2+20$.

FIG. 1

EP 1 683 647 A1

**Description**

Technical Field

The present invention relates to a dual-layer phase-change information recording medium in which information may be recorded and reproduced by means of a light such as laser beam and a recording method thereof.

Background Art

A phase-change optical disc such as CD-RW, i.e. phase-change information recording medium, generally has a basic configuration that a recording layer made of a phase-change material is formed on a plastic substrate and that a reflective layer which improves the light absorption and has a heat diffusion effect is formed thereupon. Information is recorded and reproduced by means of a laser beam irradiated from the side of the substrate.

A phase-change material changes its phase between a crystalline state and an amorphous state due to heating by an irradiation of a laser beam and cooling afterwards. After being rapidly heated, the material becomes amorphous when quenched, and it becomes crystal when annealed. A phase-change information recording medium is an application of this property to a recording and reproducing of information.

Furthermore, for the purpose of preventing the recording layer from oxidation, evaporation or deformation due to heating by the irradiation of a light, a lower protective layer, which is also referred to as a lower dielectric layer, is usually installed between the substrate and the recording layer, and an upper protective layer, which is also referred to as an upper dielectric layer, is installed between the recording layer and the reflective layer. In addition, by varying the thickness, these protective layers have a function to adjust the optical properties of the recording medium, and the lower protective layer also has a function to protect the substrate from being softened by the heat generated by recording in the recording layer.

Recent increase in the volume of information handled by computers is increasing the signal recording capacity of an optical disc such as DVD-RAM and DVD+RW and promoting the density growth of signaling information. The current recording capacity is around 650 MB for a CD and around 4.7 GB for a DVD, and the increased demand for higher-density recording is expected.

As a method for increasing the recording density of the phase-change information recording medium, several proposals have been made such as shortening the wavelength of the used laser beam to the blue light range and reducing the spot size of the laser beam irradiated to the optical recording medium by increasing the numerical aperture NA of the objective lens used for a pick-up which performs a recording and reproducing.

As a method for increasing the recording capacity by improving the recording medium itself, Patent Literatures 1 to 4 propose, for example, a dual-layer phase-change information recording medium, where two information layers including at least a recording layer and a reflective layer on one surface of a substrate are laid, and these information layers are bonded with an ultraviolet curing resin.

A separating layer as a bonding portion between the information layers, which is referred to as an intermediate layer in the present invention, has a function to separate optically the two information layers, and it is composed of a material which minimizes the absorption of the laser beam since the amount of the laser beam for recording and reproducing which reaches the back information layer should be maximized.

This dual-layer phase-change information recording medium is presented at academic conferences as in Nonpatent Literature 1, but there are still many problems.

For example, information cannot be recorded and reproduced in the recording layer of the back information layer from the direction of the irradiated laser beam, i.e. the second information layer, unless the laser beam sufficiently penetrates the front information layer, i.e. the first information layer. Therefore, it is considered that the reflective layer which composes the first information layer is removed or made ultra-thin, or that the recording layer which composes the first information layer is made ultra-thin.

A recording in a phase-change information recording medium is performed by irradiating a laser beam to the phase-change material of a recording layer followed by quenching so that a crystal phase is changed to an amorphous phase to form a mark. Accordingly, when the reflective layer is removed or extremely thinned to a thickness of around 10 nm, the heat diffusion effect diminishes, and the formation of an amorphous mark becomes difficult.

On the other hand, when a recording and reproducing is performed in the second recording layer, the second information layer should have high recording sensitivity since the laser beam is absorbed in the first information layer to some degree. Therefore, unlike the first information layer, a reflective layer with a sufficient thickness must be allocated.

Thus, the thermal properties of the first information layer and the second information layer are totally different. The first information layer is less prone to quenching, i.e. less prone to becoming amorphous, compared to the second information layer.

In order to solve this problem, Patent Literatures 5 to 6 disclose that the recording layers of the respective information layers included different materials. More specifically, a GeTe-Sb$_2$Te$_3$ pseudo-binary alloy is used for the first information layer, and Sb-Te alloy near the eutectic composition of Sb$_{70}$Te$_{30}$ is used for the second information layer. However, the GeTe-Sb$_2$Te$_3$ pseudo-binary alloy has less re-crystallization capacity compared to the Sb-Te alloy and, moreover, it has a high melting point. Therefore, it is most appropriate to use the Sb-Te alloy also to the first information layer in view of erase ratio and sensitivity.

The inventors of the present invention proposed in the prior art (Japanese Patent Application Laid-Open (JP-A) No. 2003-242676) a dual-layer phase-change information recording medium which was characterized by the use of an Sb-Te eutectic alloy in a recording layer and the smaller atomic ratio of Sb to Te in the recording layer of the first information layer compared to that in the recording layer of the second information layer. The reduction in the ratio of Sb to Te reduces the crystallization speed; therefore, a favorable mark may be formed even in the first information layer which has less effect of quenching. However, it has become clear especially for the Sb-Te eutectic alloy that the reduction in the thickness of the recording layer for increasing the transmittance in the first information layer shows a tendency to reduce the change of the optical properties between the crystal and amorphous phases, i.e. contrast. This trend is prominent when a blue laser beam is used. The reduction in contrast decreases the difference in the reproducing signal between a marked portion and an erased portion, i.e. dynamic range, which leads to the degradation of the jitter.

Incidentally, apart from the multi-layering of the information layers, a multi-level recording method has been drawing attention as a technology to increase the density and the speed of a recording medium. For example, Nonpatent Literature 2 proposes a method to achieve a recording capacity of 20 GB or greater by recording multi-level information as a occupation ratio of an amorphous recorded mark to the surrounding crystal portion.

This multi-level technology is explained below.

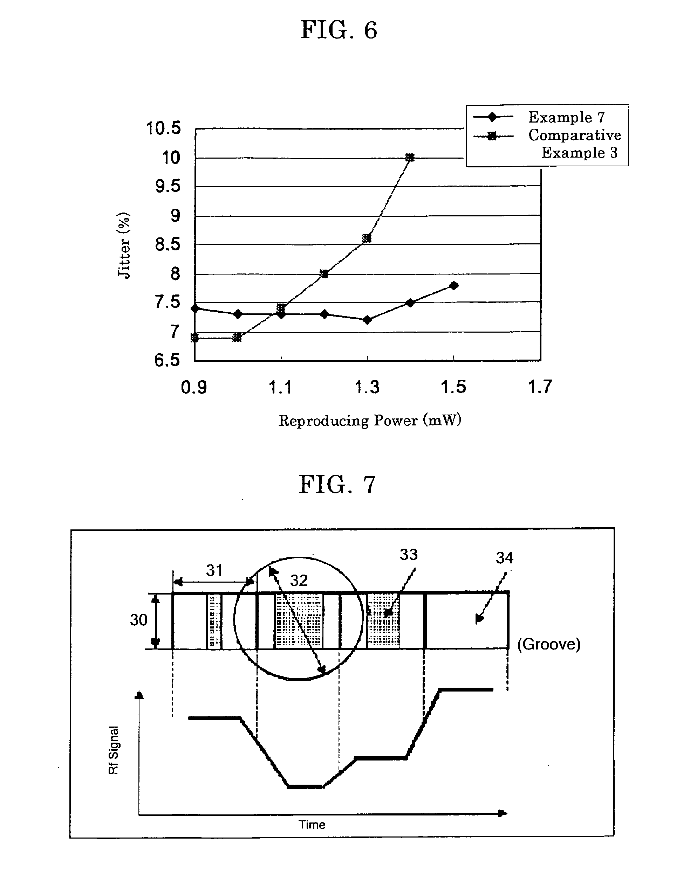

FIG. 7 shows the relation between mark occupation ratio and Rf signal. A recorded mark is located near the center of each cell which is equally divided virtually in the direction of the track. In FIG. 7, 30 denotes the width of a recording track; 31 denotes a cell length; 32 denotes a beam diameter; 33 denotes an amorphous recorded mark; and 34 denotes a crystalline non-recorded portion. The same relation is adaptable for a recorded mark of a re-writable phase-change material or a recorded mark of a phase pit recorded as a convexoconcave shape on a substrate. For a phase pit recorded as a convexoconcave shape on a substrate, the optical depth of the phase pit should be $\lambda/4$, with $\lambda$ being the wavelength of the recording and reproducing laser beam, such that the signal gain of the Rf signal is maximized. The value of the Rf signal is given as a value for the case where the condensed beam is located at the center of the cell, and it varies depending on the magnitude of the occupation ratio of a recorded mark in one cell. In general, the value of the Rf signal is maximized with the absence of a recorded mark and minimized with the maximum occupation ratio of a recorded mark.

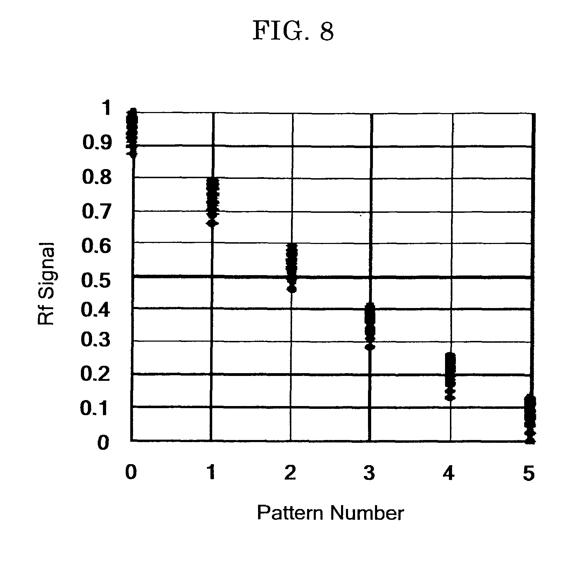

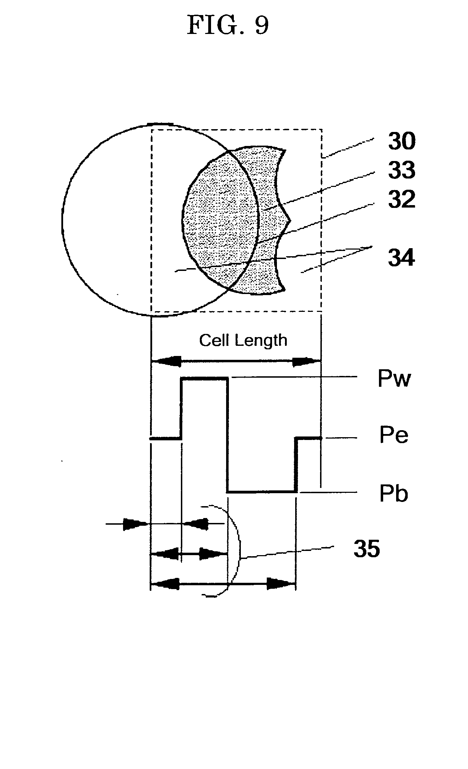

A multi-level recording is performed by means of such area modulation method, for example, with the number of recorded mark patterns, i.e. the number of multi levels, of six, and the Rf signal values from the respective recorded mark pattern show a distribution as in FIG. 8. The Rf signal values are normalized with respect to the difference between its maximum value and the minimum value, i.e. dynamic range DR, as unity. A recording and reproducing is performed with an optical system having a wavelength $\lambda$ of 650 nm and a numerical aperture NA of 0.65 (with the diameter of the condensed laser beam of approximately 0.8 $\mu$m), and the length of the cell in the circumferential direction was supposed to be approximately 0.6 $\mu$m. Such multi-level recorded mark may be formed using a recording strategy shown in FIG. 9 and modulation the laser beam with the following parameters: write power ($P_w$), erase power ($P_e$), bias power ($P_b$) and the respective start times. In FIG. 9, 30 denotes a cell; 31 denotes a cell length; 32 denotes the diameter of a reproducing beam; 33 denotes a multi-level recorded mark; 34 denotes a crystal portion; and 35 denotes a pulse starting time.

In the above-mentioned multi-level recording method, when the recording linear density is increased, i.e. the cell length is shortened with respect to the direction of the track, the cell length gradually becomes shorter than the diameter of the condensed beam, and in reproducing a cell the condensed laser beam protrudes into the cells adjacent to the target cell. Thus, even though the occupation ratio of a target cell is the same, the Rf signal value reproduced from the target cell is affected depending on the combination of the occupation ratios of the adjacent cells. In other words, an inter-symbol interference occurs with the adjacent marks. Because of this effect, the Rf signal value in each pattern shows a distribution with deviation as shown in FIG. 8. In order to detect without an error the corresponding recorded mark pattern of an object cell, the interval of the Rf signal value reproduced from each recorded mark should be greater than the deviation. In the case of FIG. 8, the interval of the Rf signal value of each recorded mark is almost equal to the deviation, which is close to the limit at which a recorded mark pattern can be detected.

As a breakthrough technology to overcome this limit, Nonpatent Literature 2 proposes a multi-level detection technology using three consecutive data cell, Data Detection using Pattern Recognition (DDPR). This technology includes two steps. The first step is to learn the multi-level signal distribution composed of the combination patterns of three consecutive data cells (e.g. $8^3 = 512$ patterns for eight-level recording) and to create a table of the patterns. The second step is to predict the three consecutive mark pattern based on the result of an unknown reproducing signal and then to detect the multi level of the unknown signal as a reproducing target with reference to the pattern table. This enables the reduction of the error rate of the multi-level signal detection even in the conventional cell density or the SDR value where an inter-symbol interference occurs in reproducing. Here, the SDR value is expressed as a ratio of the average of the standard deviation of each multi-level signal $\sigma_i$ to the dynamic range DR of a multi-level Rf signal with n being the number of levels in multi-level recording, i.e. $\Sigma\sigma_i/(n\times DR)$, which is a signal quality equivalent to the jitter in binary recording. In general, the SDR value is smaller for the smaller standard deviation $\sigma_i$ of the multi-level recording and the larger dynamic range DR, which improves the detection of the multi-level signal and decreases the error rate. On the other hand, when the number of levels in multi-level recording n is large, the SDR value increases, and the error rate increases.

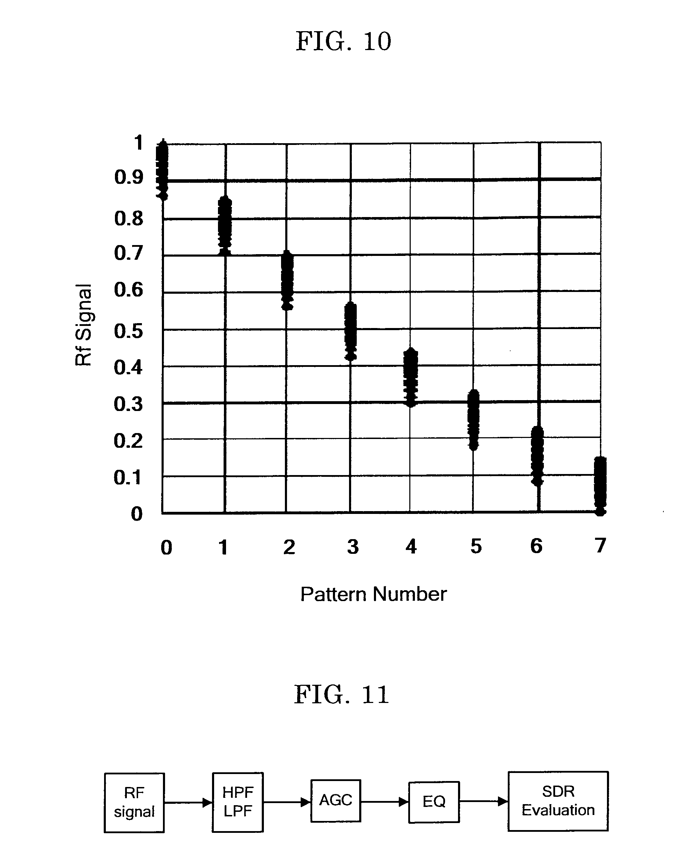

By means of such multi-level detection technology, the multi-level detection of eight values is possible with an error rate in the order of $10^{-5}$ even for an overlapping distribution of Rf signal values with the number of levels in multi-level recording n increased to eight as shown in FIG. 10.

Patent Literature 1: Japanese Patent (JP-B) No. 2702905
Patent Literature 2: JP-A No. 2000-215516
Patent Literature 3: JP-A No. 2000-222777
Patent Literature 4: JP-A No. 2001-243655
Patent Literature 5: JP-A No. 2002-144736
Patent Literature 6: JP-A No. 2002-367222
Nonpatent Literature 1: ODS2001 Technical Digest: p. 22
Nonpatent Literature 2: International Symposium on Optical Memory 2001 Technical Digest: p. 300

Disclosure of the Invention

The application of the multi-level recording technology on a single-sided dual-layer phase-change information recording medium enables a large-capacity information recording medium. However, multi-layered information layers are disadvantageous for the multi-level recording since, as mentioned above, the contrast becomes smaller with a multi-layered information layers.

It has become clear that the dual-layer phase-change information recording medium disclosed in JP-A No. 2003-242676 shows favorable recording and reproducing performance in an ordinary binary recording but that the dynamic range of the Rf signal is insufficient for increasing the density with a multi-level recording. Therefore, the present invention is aimed at providing a dual-layer phase-change information recording medium in which the erase ratio in each layer is superior, the dynamic range is improved, and a multi-level recording is possible; and a recording method thereof.

The inventors of the present invention found out the following solutions as a result of keen examinations for resolving the problems of the conventional technologies. That is, the problems may be resolved with the following inventions 1) to 11), which hereinafter are referred to as Present Inventions 1 to 11.

1) A dual-layer phase-change information recording medium, including a first substrate, a first information layer, an intermediate layer, a second information layer and a second substrate which are laminated in this order,
wherein information is recorded and reproduced by irradiating a laser beam from the side of the first substrate;
the first information layer and the second information layer respectively include a recording layer in which information may be recorded by phase change between crystalline state and amorphous state caused by the irradiation of a light; and
a first recording layer as the recording layer of the first information layer as well as a second recording layer as the recording layer of the second information layer respectively include materials represented by the following composition formulae:

$$Sb_{\alpha 1}Te_{\beta 1}Ge_{\gamma 1}M1_{\delta 1} \quad \text{(the first recording layer)}$$
$$Sb_{\alpha 2}Te_{\beta 2}Ge_{\gamma 2}M2_{\delta 2} \quad \text{(the second recording layer)}$$

wherein M1 and M2 are any one element selected from Ag, In, Se, Sn, Al, Ti, V, Mn, Fe, Co, Ni, Cu, Zn, Ga, Bi, Si, Dy, Pd, Pt, Au, S, B, C and P;
$\alpha_1$, $\beta_1$, $\gamma_1$, $\delta_1$, $\alpha_2$, $\beta_2$, $\gamma_2$ and $\delta_2$ denote percentages by atom and satisfy the following relations:

$$\alpha_1+\beta_1+\gamma_1+\delta_1=\alpha_2+\beta_2+\gamma_2+\delta_2=100;$$

$$50\leq\alpha_1\leq75;$$

$$25 \leq \beta_1 \leq 40;$$

$$0 < \gamma_1 \leq 10;$$

$$0 \leq \delta_1 \leq 10;$$

$$60 \leq \alpha_2 \leq 85;$$

$$15 \leq \beta_2 \leq 30;$$

$$0 < \gamma_2 \leq 10;$$

$$0 \leq \delta_2 \leq 10;$$

and

$$\beta_2 + \gamma_2 < \beta_1 + \gamma_1 \leq \beta_2 + \gamma_2 + 20.$$

2) The dual-layer phase-change information recording medium according to 1) above,
wherein the first information layer has a thickness of 3 nm to 10 nm, and the second information layer has a thickness of 3 nm to 20 nm.

3) The dual-layer phase-change information recording medium according to any one of 1) to 2) above,
wherein the first information layer includes at least a first lower protective layer, the first information layer, a first upper protective layer, a first reflective layer and a first heat diffusive layer sequentially formed in the order from the irradiated light; and
an interfacial layer is installed at least at any one of the boundaries between the first lower protective layer and the first recording layer and between the first recording layer and the first upper protective layer.

4) The dual-layer phase-change information recording medium according to 3) above,
wherein the first heat diffusive layer includes indium oxide ($In_2O_3$) by 50 % by mole or greater of the total heat diffusive layer material.

5) The dual-layer phase-change information recording medium according to 4) above,
wherein the first heat diffusive layer is any one of ITO, i.e. indium oxide and tin oxide, and IZO i.e. indium oxide and zinc oxide.

6) The dual-layer phase-change information recording medium according to any one of 3) to 5) above,
wherein the first heat diffusive layer has a thickness of 10 nm to 200 nm.

7) The dual-layer phase-change information recording medium according to any one of 3) to 6) above,
wherein the first reflective layer includes at least any one type selected from Au, Ag, Cu, W, Al and Ta by 90 % by atom or greater of the total first reflective layer material.

8) The dual-layer phase-change information recording medium according to any one of 3) to 7) above,
wherein the first reflective layer has a thickness of 3 nm to 20 nm.

9) The dual-layer phase-change information recording medium according to any one of 3) to 8) above, wherein the dual-layer phase-change information recording medium includes a transparent layer between the first substrate and the first lower protective layer.

10) The dual-layer phase-change information recording medium according to any one of 1) to 9) above, wherein the first substrate has a thickness of 10 μm to 600 μm.

11) A method for recording in a dual-layer phase-change information recording medium, wherein a recording is performed in the dual-layer phase-change information recording medium according to any one of 1) to 10) above while the area of an amorphous mark is controlled in three levels or more.

Brief Description of Drawings

FIG. 1 is a schematic cross-sectional diagram showing an example of a dual-layer phase-change information recording medium of the present invention.

FIG. 2 is a schematic cross-sectional diagram showing another example of a dual-layer phase-change information recording medium of the present invention.

FIG. 3 is a schematic cross-sectional diagram showing yet another example of a dual-layer phase-change information recording medium of the present invention.

FIG. 4 is a schematic cross-sectional diagram showing a dual-layer phase-change information recording medium where grooves are allocated in the first substrate and the second substrate.

FIG. 5 is a schematic cross-sectional diagram showing a dual-layer phase-change information recording medium where grooves are allocated in the second substrate and the intermediate layer.

FIG. 6 shows the relation between reproducing power and jitter in Example 7 and Comparative Example 3.

FIG. 7 is a diagram illustrating the relation between mark occupation ratio and Rf signal.

FIG. 8 is a diagram illustrating the relation between each recorded mark pattern and Rf signal in a multi-level recording with the number of multi levels of six.

FIG. 9 is a diagram showing the write strategy for the laser modulation with powers $P_w$, $P_e$ and $P_b$ and their respective start times as parameters.

FIG. 10 is a diagram illustrating the relation between each recorded mark pattern and Rf signal in a multi-level recording with the number of multi levels of eight.

FIG. 11 is a diagram illustrating the process of determining the SDR value of a reproduced signal.

FIG. 12 is a diagram showing the relation between reproducing power and SDR in Example 7 and Comparative Example 3.

Best Mode for Carrying Out the Invention

Hereinafter, the present invention is described in detail.

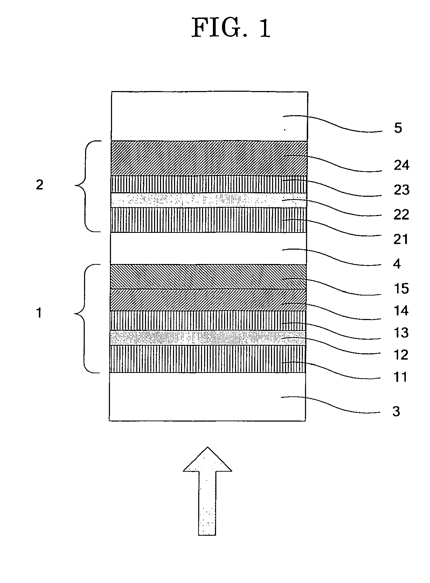

FIG. 1 is a schematic cross-sectional diagram showing an example of a dual-layer phase-change information recording medium of the present invention, and it has a structure composed of a first information layer 1, an intermediate layer 4, a second information layer 2 and a second substrate 5, which are sequentially disposed on a first substrate 3.

The first information layer is composed of a first lower protective layer 11, a first recording layer 12, a first upper protective layer 13, a first reflective layer 14 and a first heat diffusive layer 15, and the second information layer is composed of a second lower protective layer 21, a second recording layer 22, a second upper protective layer 23 and a second reflective layer 24. A barrier layer (not shown) may be allocated between the first upper protective layer 13 and the first reflective layer 14 and/or between the second upper protective layer 23 and the second reflective layer 24. The first information layer and the second information layer of the present invention are not restricted to the layer composition above.

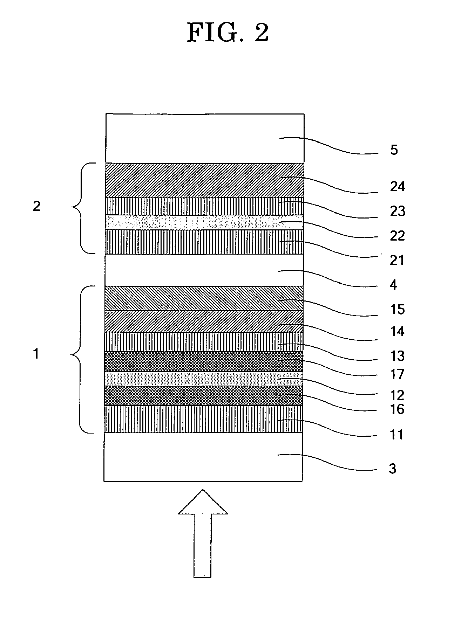

Also, FIG. 2 is a schematic cross-sectional diagram showing another example of a dual-layer phase-change information recording medium of the present invention, and a first lower interfacial layer 16 and a first upper interfacial layer 17 are allocated adjacent to the first recording layer 12.

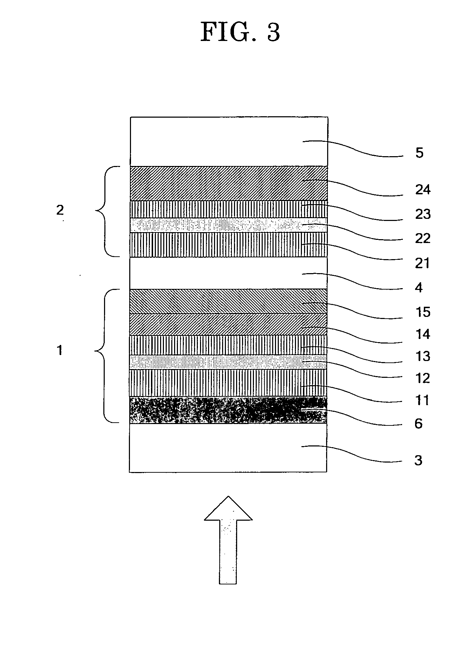

Also, FIG. 3 is a schematic cross-sectional diagram showing yet another example of a dual-layer phase-change information recording medium of the present invention, and a transparent layer 6 is allocated between the first substrate 3 and the first lower protective layer 11. Such transparent layer is allocated when the first substrate is made of a thin sheet material with a different manufacturing method from that of the recording medium in FIG. 1.

The first substrate needs to be composed of a material which can sufficiently transmit a recording and reproducing light, and a material which has been conventionally known in the art may be used. As the material, glass, ceramics and resins are commonly used, and resins are favorable in terms of formability and cost.

Examples of the resins include a polycarbonate resin, an acrylic resin, an epoxy resin, a polystyrene resin, an acrylonitrile styrene copolymer resin, a polyethylene resin, a polypropylene resin, a silicone resin, a fluorine resin, an ABS resin and a urethane resin. Among these, a polycarbonate resin and an acrylic resin such as polymethylmethacrylate (PMMA) are preferable in terms of superior formability, optical properties and cost.

On the surface of the first substrate which forms the information layer, a convexoconcave pattern may be formed according to requirements, where the convexoconcave pattern is a spiral or concentric groove usually referred to as groove portion and land portion for tracking by a laser beam. This is usually formed with an injection molding method or a photo polymerization method.

The first substrate has a thickness of preferably 10 $\mu$m to 600 $\mu$m. It is more preferably in any range of 70 $\mu$m to 120 $\mu$m and 550 $\mu$m to 600 $\mu$m.

For the second substrate, the same material as the first substrate may be used, or a material which is opaque with respect to a recording and reproducing light may be used. The material and the groove shape may be different from those of the first substrate.

The thickness of the second substrate is not particularly restricted, but the thickness of the second substrate is preferably selected such that the thicknesses of the first and second substrates add up to 1.2 mm.

Similarly to the first substrate, the second substrate may has a convexoconcave pattern such as groove and guide groove which is formed with the injection molding method or the photo polymerization method.

The smaller light absorption at the wavelength of a recording and reproducing light is preferable in the intermediate layer and the transparent layer; as a material thereof, resins are favorable in terms of formability and cost, and an ultraviolet curing resin, a slow acting resin and a thermoplastic resin may be used. In addition, a two-sided adhesive tape for bonding optical discs such as adhesive sheet DA-8320 manufactured by Nitto Denko Corporation may also be used.

Similarly to the first substrate, the intermediate layer has a convexoconcave pattern such as groove and guide groove which is formed with the injection molding method or the photo polymerization method.

The intermediate layer is installed so that a pick-up may be able to discriminate between the first information layer and the second information layer and to separate them optically, and it preferably has a thickness of 10 $\mu$m to 70 $\mu$m. An interlayer crosstalk occurs with the thickness of less than 10 $\mu$m. When the thickness is greater than 70 $\mu$m, a recording and reproducing tend to be difficult because of spherical aberration which occurs in recording and reproducing the second recording layer

The thickness of the transparent layer is not particularly restricted, but the thicknesses of the first substrate and the transparent layer should be adjusted such that the optimum thickness of the first layer of the optical information recording medium prepared with a method excluding a transparent layer as shown in FIG. 1 is equal to the sum of the thicknesses of the first substrate and the transparent layer of an optical information recording medium prepared with a different method as shown in FIG. 3. For example, it is assumed that a numerical aperture NA is 0.85 and that favorable recording and erasing performance is obtained with the optical recording medium shown in FIG. 1 with the thickness of the first substrate of 75 $\mu$m. Given that the first substrate of the optical information medium in FIG. 3 has a thickness of 50 $\mu$m, the transparent layer preferably has a thickness of 25 $\mu$m.

In the present invention, a material with a composition formula defined in Present Invention 1 above is used for the first recording layer and the second recording layer. The elements M1 and M2 are added to improve the performance and reliability.

When $\alpha_1$, $\alpha_2$, $\beta_1$ and $\beta_2$ are within the range, the re-writing performance is favorable, and the contrast between recorded portion (amorphous portion) and non-recorded portion (crystalline portion) may be increased. When $\gamma_1$ and $\gamma_2$ are within the range, the stability with respect to a reproducing laser light improves. If the power of the reproducing laser light may be increased, the difference in the reflectivity between the recorded portion and the non-recorded portion, i.e. dynamic range, may be increased. Therefore, the jitter may be reduced in binary recording, and levels may be more clearly defined in multi-level recording. As a result, the error rate decreases. When $\delta_1$ and $\delta_2$ are within the range, the re-writing performance and preservation reliability may improve.

Also, by maintaining the relation, $\beta_2+\gamma_2<\beta_1+\gamma_1\leq\beta_2+\gamma_2+20$, the contrast may be increased for the favorable recording performance in the both information layers even though recordings in the first information layer and the second information layer are performed with the same recording speed and recording linear density. Since it is not necessary to increase the recording speed and decrease the recording linear density of the first information layer, the capacity may be further increased.

These recording layers may be formed with various vapor evaporation methods such as vacuum deposition method, sputtering method, plasma-CVD method, photo-CVD method, ion-plating method and electron beam evaporation method. Among these, the sputtering method is superior in terms of mass productivity and film quality.

The thickness of the first recording layer is not particularly restricted; it is preferably 3 nm to 10 nm, and more preferably 3 nm to 8 nm. When it is less than 3 nm, it tends to be difficult to form a uniform film. When it exceeds 10 nm, the transmittance tends to decrease.

The thickness of the second recording layer is also not particularly restricted; it is preferably 3 nm to 20 nm, and more preferably 3 nm to 15 nm. When it is less than 3 nm, it tends to be difficult to form a uniform film. When it exceeds 20 nm, the recording sensitivity tends to decrease.

The first upper interfacial layer and the first lower interfacial layer are installed to prevent the materials from transferring between the first upper protective layer and the first recording layer and between the first lower protective layer and the first recording layer, respectively. These interfacial layers are effective in preventing the mass transfer caused by re-writings and in promoting the crystallization of the recording layer; therefore, the re-writing performance becomes favorable with the installation of the boundary layers.

Specific examples of the material include a metal oxide such as SiO, $SiO_2$, ZnO, $SnO_2$, $Al_2O_3$, $TiO_2$, $In_2O_3$, MgO and $ZrO_2$; a nitride such as $Si_3N_4$, AlN, TiN, ZrN, TaN and GeN; a carbide such as SiC, TaC, $B_4C$, WC, TiC and ZrC; and a mixture thereof. Among these, GeN is particularly preferable.

The interfacial layer has a thickness of preferably 1 nm to 10 nm, and more preferably 2 nm to 5 nm. When it is less than 1 nm, it is likely to be difficult to form a dense film with a uniform thickness. When it exceeds 10 nm, the transmittance decreases, and a recording and reproducing in the second information layer becomes difficult.

An interfacial layer made of the same material as above may be installed at the boundary between the second upper protective layer and the second recording layer and/or the boundary between the second recording layer and the second lower protective layer.

The first reflective layer and the second reflective layer have a function to use an incident light efficiently and to improve the cooling speed for easier transition to an amorphous phase, and therefore, a metal with high thermal conductivity is usually used. Specific examples thereof include Au, Ag, Cu, W, Al, Ta and an alloy thereof. Also, with at least one type of these elements as a main component, a material with at least one type of additional element selected from Cr, Ti, Si, Pd, Ta, Nd and Zn may be used. Here, a main component means that its composition is 90 % by atom or greater, and preferably 95 % by atom or greater, of the total reflective layer material.

Among these, an Ag material has a small refractive index even in the blue wavelength range. Since the light absorption may be minimized with n of 0.5 or less, it is preferable as a material used particularly for the reflective layer of the first information layer in the dual-layer information recording medium of the present invention.

Such reflective layers may be formed with various vapor evaporation methods such as vacuum deposition method, sputtering method, plasma-CVD method, photo-CVD method, ion-plating method and electron beam evaporation method. Among these, the sputtering method is superior in terms of mass productivity and film quality.

Since the first information layer requires a high transmittance, Ag or an alloy thereof with low refractive index and high thermal conductivity is preferably used as a material for the first reflective layer. Also, the thickness is preferably around 3 nm to 20 nm, and more preferably 5 nm to 10 nm. When it is less than 3 nm, it is likely to be difficult to form a dense film with a uniform thickness. When it exceeds 20 nm, the transmittance decreases, and a recording and reproducing in the second information layer becomes difficult.

The second reflective layer which constitutes the second information layer has a thickness of preferably 50 nm to 200 nm, and more preferably 80 nm to 150 nm. There is a tendency that the re-writing performance decreases with the thickness of less than 50 nm and that the sensitivity decreases with the thickness over 200 nm, which is not preferable.

The functions and materials of the first and second lower protective layers and the first and second upper protective layers are equivalent to those in a single-layer phase-change information recording medium; they prevent the degradation and alteration of the first recording layer and the second recording layer, improve the adhesion strength and enhance the recording performance. Heretofore known materials are applicable.

Specific examples of the materials include a metal oxide such as SiO, $SiO_2$ ZnO, $Al_2O_3$, $TiO_2$, $In_2O_3$, MgO and $ZrO_2$; a nitride such as $Si_3N_4$, A1N, TiN and ZrN; a sulfide such as ZnS, $In_2S_3$ and $TaS_4$; a carbide such as SiC, TaC, $B_4C$, WC, TiC and ZrC; diamond-like carbon; and a mixture thereof.

These materials as a simple compound may form a protective layer, or a mixture thereof may be used. Also, impurities may be included according to requirements. In addition, a protective layer should have a higher melting point than a recording layer. A mixture of ZnS and $SiO_2$ is the most preferable.

Such protective layers may be formed with various vapor evaporation methods such as vacuum deposition method, sputtering method, plasma-CVD method, photo-CVD method, ion-plating method and electron beam evaporation method. Among these, the sputtering method is superior in terms of mass productivity and film quality.

The first and second lower protective layers preferably have a thickness of 30 nm to 200 nm. When it is less than 30 nm, the first substrate or the intermediate layer is likely to be damaged by the heat in recording. The thickness exceeding 200 nm tends to affect the mass productivity. Therefore, the film thickness is designed within the above range for the optimum reflectivity.

Also, the first and second upper protective layers have a thickness of preferably 3 nm to 40 nm, and more preferably 6 nm to 20 nm. When it is less than 3 nm, the recording sensitivity decreases. When it exceeds 40 nm, the radiation effect tends to decrease.

The dual-layer phase-change information recording medium of the present invention may have a barrier layer between the upper protective layer and the reflective layer. As mentioned before, an Ag alloy and a mixture of ZnS and $SiO_2$ are the most preferable for the reflective layer and the protective layer, respectively. However, the sulfur in the protective layer possibly causes the Ag in the reflective layer to corrode, and the preservation reliability is likely to decrease. To eliminate this defect, a barrier layer is preferably installed when an Ag material is used in the reflective layer. The barrier layer does not include sulfur and at the same time has a higher melting point than the recording layer, and it desirably has a small absorption at the wavelength of a laser beam. Specific examples thereof include a metal oxide such as SiO, ZnO, $SnO_2$, $Al_2O_3$, $TiO_2$, $In_2O_3$, MgO and $ZrO_2$; a nitride such as $Si_3N_4$, AlN, TiN and ZrN; a carbide such as SiC, TaC, $B_4C$, WC, TiC and ZrC; and a mixture thereof. Among these, SiC is preferable.

The barrier layer may be formed with various vapor evaporation methods such as vacuum deposition method, sputtering method, plasma-CVD method, photo-CVD method, ion-plating method and electron beam evaporation method. Among these, the sputtering method is superior in terms of mass productivity and film quality.

The thickness of the barrier layer is preferably 2 nm to 10 nm, and more preferably 2 nm to 5 nm. When it is less than 2 nm, it cannot provide protection against the corrosion of Ag, and the preservation reliability decreases. When it exceeds 10 nm, there are tendencies that the radiation effect cannot be obtained and that the transmittance decreases.

The first heat diffusive layer desirably has a large thermal conductivity so that the recording layer irradiated with a laser beam may be quenched. Also, it preferably has a small absorption at the wavelength of a recording and reproducing laser beam so that a recording and reproducing may be performed in the back information layer. At the wavelength of a laser beam used for recording and reproducing information, the extinction coefficient is preferably 0.5 or less, and more preferably 0.3 or less. When it exceeds 0.5, the absorption in the first information layer increases, and a recording and reproducing in the second information layer becomes difficult. Also, at the wavelength of a laser beam used for recording and reproducing information, the refractive index is preferably 1.6 or greater. When it is less than this value, it becomes difficult to increase the transmittance in the first information layer.

Consequently, it preferably includes at least one type selected from a nitride, an oxide, a sulfide, a nitrogen oxide, a carbide and a fluoride. Examples thereof include A1N, $Al_2O_3$, SiC, SiN, $TiO_2$, $SnO_2$, $In_2O_3$, ZnO, Indium Tin Oxide (ITO), i.e. mixture of indium oxide and tin oxide, Indium Zinc Oxide (IZO), i.e. mixture of indium oxide and zinc oxide, mixture of tin oxide and antimony (ATO), diamond-like carbon (DLC) and BN. Among these, a material having $In_2O_3$, i.e. indium oxide, as a main component is preferable, and a material having ITO or IZO is more preferable. Here, a main component means that its composition in the whole material is 50 % by mole or greater.

The first heat diffusive layer may be formed with various vapor evaporation methods such as vacuum deposition method, sputtering method, plasma-CVD method, photo-CVD method, ion-plating method and electron beam evaporation method. Among these, the sputtering method is superior in terms of mass productivity and film quality.

The first heat diffusive layer has a thickness of preferably 10 nm to 200 nm, and more preferably 20 nm to 100 nm. When it is less than 10 nm, the radiation effect cannot be obtained. The stress increases with the thickness exceeding 200 nm, which not only decreases the re-writing performance but also affects the mass productivity.

In addition, it is not a problem at all to allocate the heat diffusive layer between the first lower protective layer and the first substrate to further improve the radiation effect.

Also, the light transmittance in the first information layer at a wavelength of a recording and reproducing laser beam of 350 nm to 700 nm is preferably 40 % to 70 %, and more preferably 40 % to 60 %.

In a dual-layer phase-change information recording medium in which a recording has been performed after initialization, the area of the recording layer in an amorphous state is smaller than that in a crystalline state. Therefore, the light transmittance in an amorphous state can be smaller than that in a crystalline state.

Next, the manufacturing method of a dual-layer phase-change information recording medium of the present invention is described.

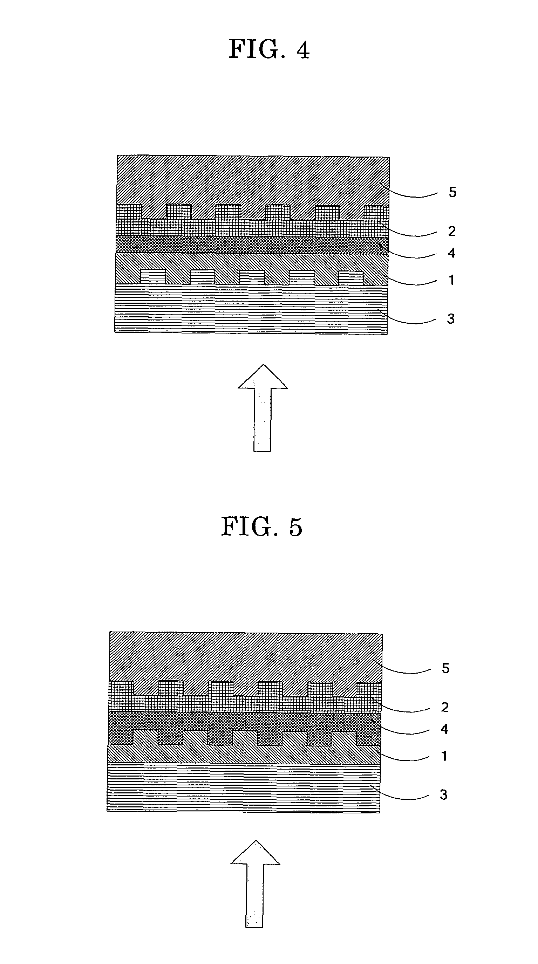

One of the manufacturing methods of a dual-layer phase-change information recording medium of the present invention includes a film formation process, an initialization process and an adhesion process, which are performed basically in this order. FIG. 4 shows a schematic cross-sectional diagram of a dual-layer phase-change information recording medium manufactured with this method, and grooves are formed in the first substrate and the second substrate.

In the film formation process, a medium in which the first information layer is formed on the grooved surface of the first substrate and a medium in which the second information layer is formed on the grooved surface of the second substrate are separately prepared.

The layers which respectively constitute the first information layer and the second information layer may be formed with various vapor evaporation methods such as vacuum deposition method, sputtering method, plasma-CVD method, photo-CVD method, ion-plating method and electron beam evaporation method. Among these, the sputtering method is superior in terms of mass productivity and film quality. In the sputtering method, a film is formed generally with a flowing gas such as argon, and a reactive sputtering may be performed while entraining oxygen or nitrogen.

In the initialization process, the whole area of the recording layers are initialized, i.e. crystallized, by irradiating an energy light such as laser beam to the first information layer and the second information layer.

When the film is likely to come off in the initialization process due to the energy of the laser beam, over-coating may be given prior to the initialization process by spin-coating a UV-curing resin on the first information layer and the second information layer and irradiating an ultraviolet light for hardening. Also, the first information layer and the second information layer may be initialized from the side of the first substrate after the following adhesion process is performed.

Next, the initialized medium in which the first information layer is formed on the grooved surface of the first substrate and the initialized medium in which the second information layer is formed on the grooved surface of the second substrate are bonded through the intermediate layer while the first information layer and the second information layer are facing each other.

For example, an ultraviolet curing resin as an intermediate layer is spin-coated on the film surface of either medium. Then, the film surfaces are faced each other and adhered by pressurization of the both substrates, to which an ultraviolet light is irradiated to harden the resin.

Also, another method for manufacturing a dual-layer phase-change information recording medium of the present invention shown in FIG. 3 is described. This method includes a primary film formation process, an intermediate layer forming process, a secondary film formation process, a substrate bonding process and an initialization process, which are performed basically in this order. FIG. 5 is a schematic cross-sectional diagram showing a dual-layer phase-change information recording medium manufactured by this method, and grooves are allocated in the second substrate and the intermediate layer.

In the primary film forming process, the second information layer is formed on the surface of the second substrate with a guide groove. The film forming method is as described above.

In the intermediate layer forming process, the intermediate layer having a guide groove is formed on the second information layer. For example, the whole area of the second information layer is coated with an ultraviolet curing resin. Then, an ultraviolet light is irradiated for hardening while a stamper made of a material which transmits an ultraviolet light is being pressed, and a groove may be formed.

In the secondary film forming process, the first information layer is formed on the surface of the intermediate layer. The film forming method is as described above.

In the substrate bonding process, the first information layer and the first substrate are bonded through a transparent layer. For example, an ultraviolet curing resin as a material of the transparent layer is spin-coated on the first information layer or the first substrate. Having bonded the first information layer and the first substrate, an ultraviolet light is irradiated for hardening. Also, instead of forming the transparent layer, the first substrate may be formed by applying a resin as a material of the first substrate to the first information layer and then hardening the resin.

In the initialization process, the whole area of the recording layers are initialized, i.e. crystallized, by irradiating an energy light such as laser beam to the first information layer and the second information layer from the side of the first substrate. It is not a problem to initialize the second information layer right after the intermediate layer forming process.

According to Present Invention 1, the present invention can provide a dual-layer phase-change information recording medium which has superior erase ratios in both the first information layer and the second information layer, has an improved dynamic range and shows superior performances in both binary recording and multi-level recording.

According to Present Inventions 2 to 8, the present invention can provide a dual-layer phase-change information recording medium which has the superior recording and reproducing performance with respect to the first and second information layers, where the reflectivity and the recording sensitivity in each layer as well as the transmittance of the first information layer may be optimized according to recording and reproducing conditions, and the recording and reproducing performance is superior with respect to the first and second information layers.

According to Present Invention 9, the present invention can provide a dual-layer phase-change information recording medium which may be easily manufactured even when the thickness of the first substrate is small.

According to Present Invention 10, the present invention can provide a dual-layer phase-change information recording medium in which a favorable recording and reproducing may be performed even when the numerical aperture NA of an objective lens is varied.

According to Present Invention 11, the present invention can provide a recording method with which a multi-level recording is possible with improved recording density compared to ordinary binary recording.

The present invention is illustrated in more detail with reference to examples and comparative examples given below, but these are not to be construed as limiting the present invention.

Examples 1 to 6 and Comparative Examples 1 to 2

On a first substrate made of a polycarbonate resin having a diameter of 12 cm, a thickness of 0.6 mm and convexoconcave of a consecutive groove for a tracking guide on its surface, a first information layer was formed by laminating the layers below in the order mentioned with a sputtering method in an Ar gas atmosphere and with a sheet-fed sputtering apparatus manufactured by Balzers AG: a first lower protective layer composed of $(ZnS)_{70} \cdot (SiO_2)_{30}$ having a thickness of 120 nm; a first lower interfacial layer composed of GeN having a thickness of 3 nm; a first recording layer with a composition formula of $Sb_{\alpha 1}Te_{\beta 1}Ge_{\gamma 1}M1_{\delta 1}$ having a thickness of 6 nm; a first upper interfacial layer composed of GeN having a thickness of 3 nm; a first upper protective layer composed of $(ZnS)_{70} \cdot (SiO_2)_{30}$ having a thickness of 15 nm; a first barrier layer composed of SiC having a thickness of 3 nm; a first reflective layer composed of Ag having a thickness of 10 nm; and a first heat diffusive layer composed of $(In_2O_3)_{90} \cdot (ZnO)_{10}$, i.e., IZO, having a thickness of 40 nm. The compositions of the first recording layer material of the respective Examples and Comparative Examples are listed in Table 1.

Next, on a second substrate having the same configuration as the first substrate, a second information layer was formed by laminating the layers below in the order mentioned with the same sputtering apparatus and sputtering conditions as above: a second reflective layer composed of $Ag_{98}Pd_1Cu_1$ having a thickness of 120 nm; a second barrier layer composed of SiC having a thickness of 3 nm; a second upper protective layer composed of $(ZnS)_{70} \cdot (SiO_2)_{30}$ having a thickness of 20 nm; a second recording layer with a composition formula of $Sb_{\alpha2}Te_{\beta2}Ge_{\gamma2}M2_{\delta2}$ having a thickness of 12 nm; and a second lower protective layer composed of $(ZnS)_{70} \cdot (SiO_2)_{30}$ having a thickness of 130 nm. The compositions of the second recording layer material of the respective Examples and Comparative Examples are listed in Table 2.

Next, an initialization process was performed on the first information layer and the second information layer by irradiating a laser beam to the first substrate and from the film surface of the second information layer, respectively.

Next, an ultraviolet-curing resin was applied to the film surface of the first information layer. This was then bonded with the second information layer film surface of the second substrate and spin-coated, and an ultraviolet light was irradiated to harden the ultraviolet curing resin to form an intermediate layer. Thus, a dual-layer phase-change information recording medium having two information layers was prepared. The thickness of the intermediate layer was set at 35 μm.

A recording was performed in each recording medium prepared as above under the following conditions:

- Laser wavelength: 407 nm
- NA: 0.65
- Linear speed: 6.0 m/s
- Track pitch: 0.43 μm

An EFM signal was recorded with a linear density of 0.18 μm/bit, and the jitter of a 3T mark in the first information layer and the second information layer was measured, and the jitter of a 3T mark in the first information layer and the second information layer after 100 re-writings was measured as well. The results of the measurement for each recording medium are shown in Tables 1 and 2. Regarding the jitter, the clock jitter was measured with a time interval analyzer to find σ of the reproducing signal, and the jitter was calculated as $\sigma/T_W$ (%) with a window width of $T_w$.

Table 1

| | $\alpha_1$ | $\beta_1$ | $\gamma_1$ | M1 | $\delta_1$ | $\beta_1 + \gamma_1$ | Jitter (%) in first information layer after first recording | Jitter (%) in first information layer after 100th recording |
|---|---|---|---|---|---|---|---|---|
| Example 1 | 60 | 34 | 5 | Ag | 1 | 39 | 7.2 | 7.8 |
| Example 2 | 55 | 35 | 7 | Se | 3 | 42 | 6.9 | 8.0 |
| Example 3 | 62 | 33 | 5 | - | 0 | 38 | 7.0 | 7.9 |
| Example 4 | 58 | 37 | 4 | Si | 1 | 41 | 7.0 | 7.5 |
| Example 5 | 65 | 27 | 5 | Ni | 3 | 32 | 7.5 | 7.9 |
| Example 6 | 58 | 39 | 3 | - | 0 | 42 | 7.2 | 8.0 |
| Comparative Example 1 | 74 | 20 | 6 | - | 0 | 26 | 11.6 | 15.2 |
| Comparative Example 1 | 61 | 33 | 4 | Ag | 2 | 37 | 7.0 | 7.8 |

Table 2

| | $\alpha_2$ | $\beta_2$ | $\gamma_2$ | M2 | $\delta_2$ | $\beta_2 + \gamma_2$ | Jitter (%) in first information layer after first recording | Jitter (%) in first information layer after 100th recording |
|---|---|---|---|---|---|---|---|---|
| Example 1 | 68 | 24 | 5 | Ag | 3 | 29 | 6.8 | 7.3 |
| Example 2 | 72 | 21 | 5 | In | 2 | 26 | 7.1 | 7.6 |
| Example 3 | 74 | 21 | 5 | - | 0 | 26 | 6.9 | 7.6 |
| Example 4 | 64 | 29 | 4 | Ga | 3 | 33 | 6.9 | 7.2 |
| Example 5 | 70 | 21 | 6 | Sn | 3 | 27 | 7.4 | 8.1 |
| Example 6 | 77 | 19 | 3 | In | 1 | 22 | 7.2 | 7.5 |
| Comparative Example 1 | 74 | 20 | 6 | - | 0 | 26 | 6.9 | 7.3 |
| Comparative Example 1 | 61 | 33 | 4 | Ag | 2 | 37 | 7.6 | 14.7 |

The values of the jitter of the recording media in Examples 1 to 6 were below 9 % for both the first information layer and the second information layer, and they were found to be superior as a recording medium. On the contrary, the recording media in Comparative Examples 1 to 2 had the value of $\beta_1+\gamma_1$ beyond the range of $\beta_2+\gamma_2<\beta_1+\gamma_1\leq\beta_2+\gamma_2+20$, and a favorable recording could be performed in neither the first recording layer nor the second information layer.

In addition, other experimental manufactures revealed that the preservation reliability and the sensitivity could be improved by adding Ag, In, Se, Sn, Al, Ti, V, Mn, Fe, Co, Ni, Cu, Zn, Ga, Bi, Si, Dy, Pd, Pt, Au, S, B, C and P as M1 and M2. Also, a favorable recording and reproducing was performed in both the first information layer and the second information layer when the parameters were in following ranges: $50\leq\alpha_1\leq75$, $25\leq B_1\leq40$, $0<\gamma_1\leq10$, $0\leq\delta_1\leq10$, $60\leq\alpha_2\leq85$, $15\leq\beta_2\leq30$, $0<\gamma_2\leq10$, $0\leq\delta_2\leq10$ and $\beta_2+\gamma_2<\beta_1+\gamma_1\leq\beta_2+\gamma_2+20$.

Example 7

A dual-layer phase-change information recording medium of Example 7 was prepared in the same manner as Example 1 except that $Sb_{61}Te_{29}Ge_{10}$ was used as the first recording layer material and that $Sb_{70}Te_{20}Ge_{10}$ was used as the second recording layer material.

Comparative Example 3

A dual-layer phase-change information recording medium of Comparative Example 3 was prepared in the same manner as Example 1 except that $Sb_{66}Te_{34}$ was used as the first recording layer material and that $Sb_{75}Te_{25}$ was used as the second recording layer material.

A recording under the same conditions as Example 1 was performed in the first recording layer of the recording media of Example 7 and Comparative Example 3, respectively, and the jitter was measured while the reproducing power was varied. The results are shown in FIG. 6. The jitter is the value measured after three minutes of irradiating a laser beam to the recorded portion with the respective power.

As it can be seen from FIG. 6, the recording medium of Example 7, represented by the line connecting the rhombic marks in the figure, did not have an increase in the jitter observed until the power of the reproducing light reached 1.3 mW, and the increase afterwards was moderate. However, the recording medium of Comparative Example 3, represented by the line connecting the square marks in the figure, had an increase in the jitter at 1.1 mW, and the increase afterwards was rapid.

Next, a multi-level recording with eight values was performed on the recording media of Example 7 and Comparative Example 3. The cell length was set at 0.26 $\mu$m. The conventional waveform shown in FIG. 9 was used as the write strategy, and the powers $P_w$, $P_e$, $P_b$ and the respective start times were optimized. The laser wavelength, NA and the recording speed were the same as those in Example 1.

For an evaluation of a medium, first of all, eight-value information including $M_1$ to $M_7$ with marks and $M_0$ without a mark was randomly recorded. In order to measure the fluctuation in the deviation of the reflected signal at each level, i.e. SDR, 80 sectors of data were loaded, where one sector contained 1,221 cells. At this point, 37 cells of consecutive data containing $M_0$ and $M_7$ were recorded at the head of a sector. As in the flow diagram in FIG. 11A, reproduced signals were filtered to remove large variations of the reflected signals at a level of several kHz or less which existed in one track and then treated in an AGC process. In the AGC process, based on the amplitude of $M_0$ and $M_7$, the signals recorded thereafter is processed into signals having amplitude of a certain level by eliminating the difference in the variation of the amplitude. Then, the signals were passed through a waveform equivalent (EQ) circuit so that the signals, especially signals with small amplitude such as $M_1$ and $M_2$ marks, were amplified. These signals were retrieved to find the standard deviation of the reflex potential at each level, and the SDR was obtained.

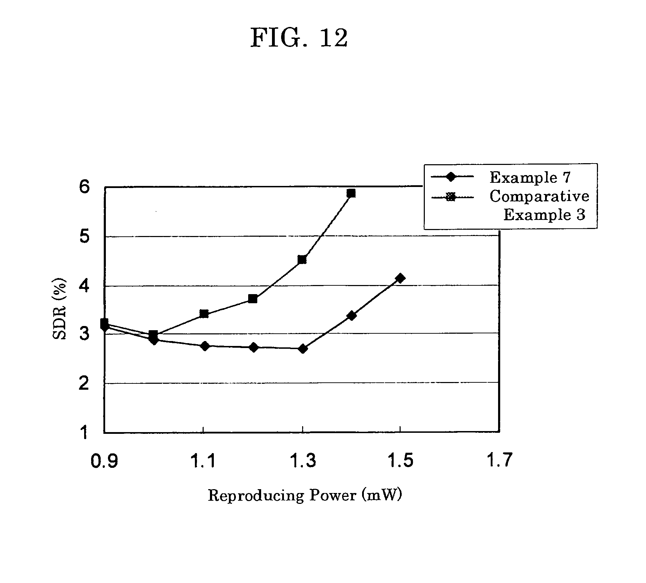

FIG. 12 shows the results of the SDR measurements with varying reproducing power. For the recording medium of Example 7, represented by the line connecting the rhombic marks in the figure, the reproducing power could be increased up to 1.3 mW. The SDR could be reduced by the increased reproducing power, and it was found superior compared to the recording medium of Comparative Example 3, represented by the line connecting the square marks in the figure. An addition of Ge to the recording layer material can improve the stability of the reproducing light and enable a reproducing at a high power. Therefore, the amplitude of the reflected signals at a recorded mark portion and a non-recorded portion may be increased, and presumably the SDR is reduced even in a multi-level recording.

Multi-level recordings were performed under the same conditions also with the recording media of Examples 1 to 6 and Comparative Examples 1 to 2. For each recording medium, the SDR was measured at the maximum reproducing power without degradation. The SDR obtained as above was evaluated with the following ratings:

A: SDR $\leq$ 3.0 %, where a sufficient margin may be maintained as a practical system;
B: 3.0 % < SDR $\leq$ 3.2 %, acceptable as a practical system; and
C: 3.2 % < SDR.

The results are shown in Table 3.

As indicated in Table 3, regarding Examples 1 to 6 as the information recording media of the present invention, the values of SDR could be reduced in a balanced manner in the both first information layer and second information layer, and the values of SDR could maintain the acceptable level even after re-writings.

Table 3

|  | SDR (%) after first recording | | SDR (%) after 100th recording | |
| --- | --- | --- | --- | --- |
|  | First Information Layer | Second Information Layer | First Information Layer | Second Information Layer |
| Example 1 | A | A | A | A |
| Example 2 | A | A | A | A |
| Example 3 | A | A | A | A |
| Example 4 | A | A | B | A |
| Example 5 | B | A | B | A |
| Example 6 | A | A | B | A |
| Comparative Example 1 | C | A | C | A |
| Comparative Example 1 | A | B | B | C |

Example 8

On a second substrate made of a polycarbonate resin having a diameter of 12 cm, a thickness of 1.1 mm and convexoconcave of a consecutive groove for a tracking guide on its surface, a second information layer was formed by laminating the layers below in the order mentioned with a sputtering method in an Ar gas atmosphere and with a sheet-fed sputtering apparatus manufactured by Balzers AG: a second reflective layer composed of $Ag_{98}Pd_1Cu_1$ having a thickness of 120 nm; a barrier layer composed of $TiO_2$ having a thickness of 3 nm; a second upper protective layer composed of $(ZnS)_{70} \cdot (SiO_2)_{30}$ having a thickness of 15 nm; a second recording layer composed of $Sb_{70}Te_{22}Ge_5Ag_1In_2$ having a thickness of 12 nm; and a second lower protective layer composed of $(ZnS)_{70} \cdot (SiO_2)_{30}$ having a thickness of 130 nm.

A resin was coated over this second information layer, and an intermediate layer having convexoconcave of a consecutive groove for a tracking guide was formed with a photo polymerization (2P) method. The intermediate layer had a thickness of 30 $\mu$m.

On the intermediate layer, a first heat diffusive layer composed of $(In_2O_3)_{90} \cdot (SnO)_{10}$, i.e., ITO, having a thickness of 120 nm was formed, and a first information layer was further formed by laminating the layers below in the order mentioned with the same sputtering apparatus and sputtering conditions as above: a first reflective layer composed of Ag having a thickness of 10 nm; a barrier layer composed of $TiO_2$ having a thickness of 3 nm; a first upper protective layer composed of $(ZnS)_{70} \cdot (SiO_2)_{30}$ having a thickness of 10 nm; a first upper interfacial layer composed of GeN having a thickness of 2 nm; a first recording layer composed of $Sb_{67}Te_{28}Ge_4Ag_1$ having a thickness of 5 nm; a first lower interfacial layer composed of GeN having a thickness of 2 nm; and a first lower protective layer composed of $(ZnS)_{70} \cdot (SiO_2)_{30}$ having a thickness of 120 nm.

Furthermore, on the film surface of the first information layer, a first substrate made of a polycarbonate film having a diameter of 12 cm and a thickness of 40 $\mu$m was bonded through a transparent layer made of a two-sided adhesive sheet having a thickness of 45 $\mu$m. Thus, a dual-layer phase-change information recording medium was prepared.

In addition, aside from this, a first information layer, a transparent layer and a first substrate were formed in the same manner on a substrate having a thickness of 1.1 mm for transmittance measurement, and the light transmittance was measured from the side of the first substrate.

Examples 9 to 16

Dual-layer phase-change information recording media were prepared in the same manner as Example 8 except that the film thicknesses of the first heat diffusive layer, the first reflective layer, the first recording layer and the second recording layer were changed as described in Table 4.

A recording was performed in each of the recording media of Examples 8 to 16 prepared as above under the following conditions:

- Laser wavelength: 407 nm
- NA: 0.85
- Linear speed: 5.28 m/s
- Track pitch: 0.32 $\mu$m

An 1-7 RLL signal was recorded with a linear density of 0.12 $\mu$m/bit, and the jitter of a 2T mark in the first information layer and the second information layer was measured, and the jitter of a 2T mark in the first information layer and the second information layer after 100 re-writings were measured as well. The results of the measurements are shown in Table 4. Also, a multi-level recording with eight values was performed with the cell length of 0.22 $\mu$m, and the SDR was measured. The SDR was evaluated with the following ratings:

A: SDR $\leq$ 3.0 %, where a sufficient margin may be maintained as a practical system;
B: 3.0 % < SDR $\leq$ 3.2 %, acceptable as a practical system; and
C: 3.2 % < SDR.

Table 4

| | Film thickness (nm) | | | | Light Transmittance (%) | | Jitter after first recording (%) | | Jitter after 100th recording (%) | | SDR after first recording (%) | |
|---|---|---|---|---|---|---|---|---|---|---|---|---|
| | First Heat Diffusive Layer | First Reflective Layer | First Recording Layer | Second Recording Layer | Amorphous Phase | Crystalline Phase | First Inf. Layer | Second Inf. Layer | First Inf. Layer | Second Inf. Layer | First Inf. Layer | Second Inf. Layer |
| Example 8 | 120 | 10 | 5 | 12 | 47 | 50 | 6.4 | 6.9 | 6.6 | 7.2 | A | A |
| Example 9 | 10 | 10 | 6 | 10 | 47 | 51 | 7.1 | 6.8 | 7.7 | 7.2 | B | A |
| Example 10 | 40 | 10 | 5 | 18 | 50 | 53 | 6.9 | 7.3 | 7.0 | 7.9 | A | A |
| Example 11 | 80 | 5 | 6 | 6 | 48 | 50 | 6.5 | 6.6 | 6.8 | 6.9 | B | B |
| Example 12 | 100 | 10 | 6 | 10 | 47 | 52 | 6.8 | 6.7 | 7.0 | 7.1 | A | A |
| Example 13 | 120 | 10 | 8 | 15 | 44 | 49 | 6.4 | 6.8 | 6.6 | 7.4 | A | A |
| Example 14 | 140 | 10 | 6 | 8 | 47 | 53 | 6.8 | 6.6 | 7.0 | 7.2 | A | A |
| Example 15 | 35 | 15 | 5 | 5 | 45 | 49 | 6.7 | 6.8 | 6.8 | 7.8 | B | B |
| Example 16 | 35 | 5 | 10 | 13 | 41 | 46 | 6.3 | 7.1 | 6.7 | 7.6 | A | A |

Any recording medium had a light transmittance of 40 % or greater and the values of jitter after both the first recording and the 100th recording were 9 % or less, and it was found to be superior as an optical recording medium. In addition, the SDR in multi-level recording was within the acceptable range as a practical system.

Thus, a favorable recording and reproducing may be performed in the optical recording medium of the present invention by adjusting the thickness of the first substrate in the range of 10 $\mu$m to 60 $\mu$m even though the numerical aperture NA of an objective lens which performs the recording and reproducing is varied.

In addition, other experimental manufactures revealed that a favorable recording and reproducing was performed in both the first information layer and the second information layer when the following conditions were met. That is, in the first information layer, the thicknesses of the recording layer, the reflective layer and the heat diffusive layer were 3 nm to 10 nm, 3 nm to 20 nm, and 10 nm to 200 nm, respectively, and in the second information layer, the thickness of the recording layer was 3 nm to 20 nm.

In particular, when the thicknesses of the first recording layer and the reflective layer in the first information layer were greater than 10 nm and 20 nm, respectively, the light transmittance after the initialization could not be increased to 40 % or greater, and a favorable recording could not be performed in the second information layer. Also, when the thickness of the heat diffusive layer was greater than 200 nm, it took at least 60 seconds to produce one dual-layer optical disc, which indicated difficulties in mass production.

Example 17

On a first substrate made of a polycarbonate resin having a diameter of 12 cm, a thickness of 0.6 mm and convexoconcave of a consecutive groove for a tracking guide on its surface, a first information layer was formed by laminating the layers below in the order mentioned with a sputtering method in an Ar gas atmosphere and with a sheet-fed sputtering apparatus manufactured by Balzers AG: a first lower protective layer composed of $(ZnS)_{80} \cdot (SiO_2)_{20}$ having a thickness of 50 nm; a first recording layer composed of $Sb_{64}Te_{28}Ge_5Ag_1$ having a thickness of 6 nm; a first upper protective layer composed of $(ZnS)_{80} \cdot (SiO_2)_{20}$ having a thickness of 15 nm; a barrier layer composed of SiC having a thickness of 3 nm; a first reflective layer composed of $Ag_{98}Zn_1Al_1$ having a thickness of 10 nm; and a first heat diffusive layer composed of $(In_2O_3)_{90} \cdot (ZnO)_{10}$, i.e., IZO, having a thickness of 80 nm.

Next, on a second substrate having the same configuration as the first substrate, a second information layer was formed by laminating the layers below in the order mentioned with the same sputtering apparatus and sputtering conditions as above: a second reflective layer composed of $Al_{98}Ti_2$ having a thickness of 80 nm; a second upper protective layer composed of $(ZnS)_{80} \cdot (SiO_2)_{20}$ having a thickness of 22 nm; a second recording layer composed of $Sb_{67}Te_{25}Ge_4Ag_1In_3$ having a thickness of 15 nm; and a second lower protective layer composed of $(ZnS)_{80} \cdot (SiO_2)_{20}$ having a thickness of 80 nm. At this point, the light transmittance at a wavelength of 660 nm of the first information layer was measured from the first substrate with a spectrophotometer manufactured by SHIMADZU Corporation.

Next, an initialization process was performed on the first information layer and the second information layer by irradiating a laser beam to the first substrate and from the film surface of the second information layer, respectively. At this point, the light transmittance at a wavelength of 660 nm of the first information layer was measured again.

Next, an ultraviolet-curing resin was applied to the film surface of the first information layer. This was then bonded with the second information layer film surface of the second substrate and spin-coated, and an ultraviolet light was irradiated to harden the ultraviolet curing resin to form an intermediate layer. Thus, a dual-layer phase-change information recording medium having two information layers was prepared. The thickness of the intermediate layer was set at 50 $\mu$m.

The first information layer of the present example had a light transmittance at a wavelength of 660 nm of 55 % prior to initialization and 51 % after initialization.

A recording was performed in each recording medium prepared as above under the following conditions:

- Laser wavelength: 660 nm
- NA: 0.65
- Linear speed: 3.49 m/s
- Track pitch: 0.74 $\mu$m

An EFM signal was recorded with a linear density of 0.267 $\mu$m/bit, and the jitter of a 3T mark in the first information layer and the second information layer was measured, and the jitter of a 3T mark in the first information layer and the second information layer after 100 re-writings were measured as well. A favorable recordings and reproducing could be performed in both the first information layer and the second information layer.

**Claims**

1. A dual-layer phase-change information recording medium, comprising a first substrate, a first information layer, an intermediate layer, a second information layer and a second substrate which are laminated in this order, wherein information is recorded and reproduced by irradiating a laser beam from the side of the first substrate; the first information layer and the second information layer respectively comprise a recording layer in which information may be recorded by phase change between crystalline state and amorphous state caused by the irradiation of a light; and

   a first recording layer as the recording layer of the first information layer as well as a second recording layer as the recording layer of the second information layer respectively comprise materials represented by the following composition formulae:

$$Sb_{\alpha 1}Te_{\beta 1}Ge_{\gamma 1}M1_{\delta 1} \quad \text{(the first recording layer)}$$
$$Sb_{\alpha 2}Te_{\beta 2}Ge_{\gamma 2}M2_{\delta 2} \quad \text{(the second recording layer)}$$

   wherein M1 and M2 are any one element selected from Ag, In, Se, Sn, Al, Ti, V, Mn, Fe, Co, Ni, Cu, Zn, Ga, Bi, Si, Dy, Pd, Pt, Au, S, B, C and P;

   $\alpha_1$, $\beta_1$, $\gamma_1$, $\delta_1$, $\alpha_2$, $\beta_2$, $\gamma_2$ and $\delta_2$ denote percentages by atom and satisfy the following relations:

$$\alpha_1 + \beta_1 + \gamma_1 + \delta_1 = \alpha_2 + \beta_2 + \gamma_2 + \delta_2 = 100;$$

$$50 \leq \alpha_1 \leq 75;$$

$$25 \leq \beta_1 \leq 40;$$

$$0 < \gamma_1 \leq 10;$$

$$0 \leq \delta_1 \leq 10;$$

$$60 \leq \alpha_2 \leq 85;$$

$$15 \leq \beta_2 \leq 30;$$

$$0 < \gamma_2 \leq 10;$$

$$0 \leq \delta_2 \leq 10;$$

   and

$$\beta_2 + \gamma_2 < \beta_1 + \gamma_1 \leq \beta_2 + \gamma_2 + 20.$$

**2.** The dual-layer phase-change information recording medium according to Claim 1,
wherein the first information layer has a thickness of 3 nm to 10 nm, and the second information layer has a thickness of 3 nm to 20 nm.

**3.** The dual-layer phase-change information recording medium according to any one of Claims 1 to 2,
wherein the first information layer comprises a first lower protective layer, the first information layer, a first upper protective layer, a first reflective layer and a first heat diffusive layer sequentially formed in the order from the irradiated light; and
the first information layer comprises an interfacial layer at least at any one of the boundaries between the first lower protective layer and the first recording layer and between the first recording layer and the first upper protective layer.

**4.** The dual-layer phase-change information recording medium according to Claim 3,
wherein the first heat diffusive layer comprises indium oxide ($In_2O_3$) by 50 % by mole or greater of the total heat diffusive layer material.

**5.** The dual-layer phase-change information recording medium according to Claim 4,
wherein the first heat diffusive layer is any one of Indium Tin Oxide (ITO), mixture of indium oxide and tin oxide, and Indium Zinc Oxide (IZO), mixture of indium oxide and zinc oxide.

**6.** The dual-layer phase-change information recording medium according to any one of Claims 3 to 5,
wherein the first heat diffusive layer has a thickness of 10 nm to 200 nm.

**7.** The dual-layer phase-change information recording medium according to any one of Claims 3 to 6,
wherein the first reflective layer comprises any one type selected from Au, Ag, Cu, W, Al and Ta by 90 % by atom or greater of the total first reflective layer material.

**8.** The dual-layer phase-change information recording medium according to any one of Claims 3 to 7,
wherein the first reflective layer has a thickness of 3 nm to 20 nm.

**9.** The dual-layer phase-change information recording medium according to any one of Claims 3 to 8,
wherein the dual-layer phase-change information recording medium comprises a transparent layer between the first substrate and the first lower protective layer.

**10.** The dual-layer phase-change information recording medium according to any one of Claims 1 to 9,
wherein the first substrate has a thickness of 10 $\mu$m to 600 $\mu$m.

**11.** A method for recording in a dual-layer phase-change information recording medium comprising the step of controlling the area of an amorphous mark in three levels or more,
wherein the recording is performed in the dual-layer phase-change information recording medium according to any one of Claims 1 to 10.

# FIG. 1

# FIG. 2

# FIG. 3

# FIG. 4

# FIG. 5

# FIG. 6

# FIG. 7

# FIG. 8

# FIG. 9

Cell Length

Pw

Pe

Pb

30
33
32
34
35

FIG. 10

FIG. 11

# FIG. 12

## INTERNATIONAL SEARCH REPORT

| | International application No. |
|---|---|
| | PCT/JP2004/016139 |

**A. CLASSIFICATION OF SUBJECT MATTER**
Int.Cl⁷ B41M5/26, G11B7/24, G11B7/0045

According to International Patent Classification (IPC) or to both national classification and IPC

**B. FIELDS SEARCHED**

Minimum documentation searched (classification system followed by classification symbols)
Int.Cl⁷ B41M5/26, G11B7/24, G11B7/0045

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)

**C. DOCUMENTS CONSIDERE D TO BE RELEVANT**

| Category* | Citation of document, with indication, where appropriate, of the relevant passages | Relevant to claim No. |
|---|---|---|
| Y | JP 2002-144736 A (Matsushita Electric Industrial Co., Ltd.), 22 May, 2002 (22.05.02), & US 202/54983 A1 & EP 1187119 A2 | 1-11 |
| Y | JP 2-112987 A (Toray Industries, Inc.), 25 April, 1990 (25.04.90), (Family: none) | 1-11 |
| Y | JP 2001-273638 A (Mitsubishi Chemical Corp.), 05 October, 2001 (05.10.01), & US 2001/12253 A1 & EP 1117094 A2 | 1-11 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 November, 2004 (17.11.04) | 07 December, 2004 (07.12.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/016139 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2003-100020 A  (Ricoh Co., Ltd.), 04 April, 2003 (04.04.03), & US 2003/58763 A1    & EP 1296315 A2 | 1-11 |
| Y | JP 2003-242676 A  (Ricoh Co., Ltd.), 29 August, 2003 (29.08.03), (Family: none) | 1-11 |

Form PCT/ISA/210 (continuation of second sheet) (January 2004)